# EUROPEAN PATENT APPLICATION

(11) **EP 1 816 865 A2**
(43) Date of publication of application: **08.08.2007**
(21) Application number: 07101005.2
(22) Date of filing: 23.01.2007
(51) Int. Cl.: H04N 5/782

(54) **Broadcasting signal receiver and control nethod thereof**

(30) Priority: 02.02.2006 KR 20060010011
(71) Applicant: Samsung Electronics Co., Ltd., Suwon-si 442-742 Gyeonggi-Do (KR)
(72) Inventor: Park, Mi-ju, Seoul (KR); Kim, Dae-gu, Jung-gu, Seoul (KR)
(74) Representative: Perkins, Dawn Elizabeth

(57) **Abstract**

A control method of a broadcasting signal receiver including a data storing unit (40) and a pre-programming information storing unit (50) in which pre-programming information on a pre-programmed broadcasting program is stored includes receiving an instruction to record a broadcasting program, assigning a storage space for recording the pre-programmed broadcasting program in the data storing unit (40) based on the pre-programming information stored in the pre-programming information storing unit (50); and calculating residual capacity of the data storing unit (40) after the assignment and displaying information on the residual capacity of the data storing unit (40).

## Description

The present invention relates to a broadcasting signal receiver and a control method thereof, and more particularly, to a broadcasting signal receiver which is capable of performing a pre-programmed recording or an instant recording for broadcasting programs, and a control method thereof.

In recent years, products with a built-in recording apparatus for recording broadcasting programs are being successively put on the market. A hard disk drive (HDD) is mainly used as the recording apparatus for use in a broadcasting signal receiver. Users are able to make a pre-programmed or instant recording of desired broadcasting programs in the HDD.

For example, when it is time to perform pre-programmed recording, the broadcasting signal receiver receives a broadcasting program of a particular channel automatically according to pre-programming information on the broadcasting program which is set by a user, and performs a recording for the received broadcasting program by storing the broadcasting program in the HDD. When the user selects a function to playback the recorded broadcasting program, the broadcasting program stored in the HDD is decoded and displayed on a screen.

However, if there exist a number of pre-programmed broadcasting programs in the HDD, a recording for broadcasting programs programmed later in the sequence may not be performed due to lack of storage space in the HDD.

In addition, when an instant recording is performed, pre-programmed broadcasting programs may not be recorded due to lack of storage space.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a broadcasting signal receiver and a control method, which notify a user of a usable storage space by displaying information related to residual capacity after assigning a storage space for recording a pre-programmed broadcasting program when a recording function of a broadcasting program is selected.

According to an aspect of the present invention, there is provided a control method of a broadcasting signal receiver including a data storing part and a pre-programming information storing unit in which pre-programming information on a pre-programmed broadcasting program is stored, comprising: receiving an instruction to record a broadcasting program; assigning a storage space for recording the pre-programmed broadcasting program in the data storing unit based on the pre-programming information stored in the pre-programming information storing unit; and calculating residual capacity of the data storing unit after the assignment and displaying information on the residual capacity.

According to t another aspect of the present invention, the control method further comprises: displaying a selection menu for cancellation of at least one preprogrammed broadcasting program and/or deletion of the broadcasting program recorded in the data storing unit if the residual capacity of storage space is insufficient.

According to another aspect of the present invention, the control method further comprises: when the cancellation of at least one pre-programmed broadcasting program and/or the deletion of the recorded broadcasting program is selected from the selection menu, performing the cancellation and/or the deletion in response to the selection; and after the cancellation and/or the deletion, calculating the residual capacity of the data storing unit and displaying the information on the residual capacity after the cancellation and/or the deletion.

According to another aspect of the present invention, the control method further comprises: if there exists the residual capacity in the data storing unit, performing recording of the broadcasting program selected for recording.

According to another aspect of the present invention, the control method further comprises: recording the program selected for recording if sufficient residual capacity exists in the data storing unit.

According to an aspect of the present invention, there is provided a control method of a broadcasting signal receiver including a data storing unit and a pre-programming information storing unit in which pre-programming information on a pre-programmed broadcasting program is stored, comprising: receiving an instruction to record a broadcasting program; assigning a storage space for recording the pre-programmed broadcasting program in the data storing unit based on the pre-programming information stored in the pre-programming information storing unit; comparing residual capacity of the data storing unit with recording capacity of the broadcasting program selected for recording by a user; and if the residual capacity is smaller than the recording capacity, displaying information on the residual capacity.

According to an aspect of the present invention, the control method further comprises: displaying a selection menu for cancellation of at least one preprogrammed broadcasting program and/or deletion of the broadcasting program recorded in the data storing unit.

According to another aspect of the present invention, the control method further comprises: when the cancellation of at least one pre-programmed broadcasting program and/or the deletion of the recorded broadcasting program is selected from the selection menu, performing the cancellation and/or the deletion in response to the selection.

According to another aspect of the present invention, the selection menu comprises a selection item for cancellation of recording for the broadcasting program selected for recording.

According to another aspect of the present invention, the control method further comprises: if the residual capacity is larger than the recording capacity, performing the recording for the broadcasting program selected for recording.

According to another aspect of the present invention, the instruction to record the broadcasting program comprises at least one of a pre-programming recording instruction and an instant recording instruction.

The foregoing and other aspects of the present invention are also achieved by providing a broadcasting signal receiver including a data storing unit and a pre-programming information storing unit in which pre-programming information on a pre-programmed broadcasting program is stored, comprising: a user selecting unit for receiving an instruction to record a broadcasting program; a user interface (UI) generating unit for generating information on residual capacity of the data storing unit; and a controlling unit for assigning a storage space for recording the preprogrammed broadcasting program in the data storing unit based on the pre-programming information stored in the pre-programming information storing unit when the instruction to record the broadcasting program is input through the user selecting unit, calculating the residual capacity of the data storing unit after the assignment, and controlling the UI generating unit to generate and display information on the residual capacity.

According to another aspect of the present invention, if the residual capacity is insufficient, the controlling unit controls the UI generating unit to generate and display a selection menu for cancellation of at least one pre-programmed broadcasting program and/or deletion of the broadcasting program recorded in the data storing unit.

According to another aspect of the present invention, when the cancellation of at least one pre-programmed broadcasting program and/or the deletion of the recorded broadcasting program is selected from the selection menu, the controlling unit performs the cancellation and/or the deletion in response to the selection, calculates the residual capacity of the data storing unit after the cancellation and/or the deletion, and displays the information on the residual capacity through the UI generating unit.

According to an aspect of the present invention, there is provided a broadcasting signal receiver including a data storing unit and a pre-programming information storing unit in which pre-programming information on a pre-programmed broadcast program is stored, comprising: a user selecting unit for receiving an instruction to record a broadcasting program; a UI generating unit for displaying information on residual capacity of the data storing unit; and a controlling unit for assigning a storage space for recording the pre-programmed broadcast program in the data storing unit based on the pre-programming information stored in the pre-programming information storing unit when the instruction to record the broadcasting program is input through the user selecting unit, comparing the residual capacity of the data storing unit with recoding capacity of the broadcasting program selected for recording by a user, and controlling the UI generating unit to generate and display information on the residual capacity if the residual capacity is smaller than the recording capacity.

According to another aspect of the present invention, the controlling unit controls the UI generating unit to generate a selection menu for cancellation of at least one pre-programmed broadcasting program and/or deletion of the broadcasting program recorded in the data storing unit.

According to another aspect of the present invention, when the cancellation of the at least one pre-programmed broadcasting program and/or the deletion of the recorded broadcasting program is selected from the selection menu, the controlling unit performs the cancellation and/or the deletion in response to the selection.

According to another aspect of the present invention, the selection menu comprises a selection item for cancellation of recording for the broadcasting program selected for recording.

According to another aspect of the present invention, if the residual capacity is larger than the recording capacity, the controlling unit performs the recording for the broadcasting program selected for recording.

According to another aspect of the present invention, the instruction to record the broadcasting program comprises at least one of a pre-programming recording instruction and an instant recording instruction.

The above and other aspects of the present invention will become apparent and more readily from the following description of the exemplary embodiments, taken in conjunction with the accompanying drawings of which:
Figure 1 is a block diagram of a broadcasting signal receiver according to an exemplary embodiment of the present invention;
Figure 2 is a flow chart illustrating operation of a broadcasting signal receiver according to an exemplary embodiment of the present invention; and
Figure 3 is a flow chart illustrating operation of a broadcasting signal receiver according to another exemplary embodiment of the present invention.

Reference will now be made in detail to exemplary embodiments of the present invention, examples of which are illustrated in the accompanying drawings.

In an exemplary embodiment of the present invention, a television (TV) will be used as an example for a broadcasting signal receiver.

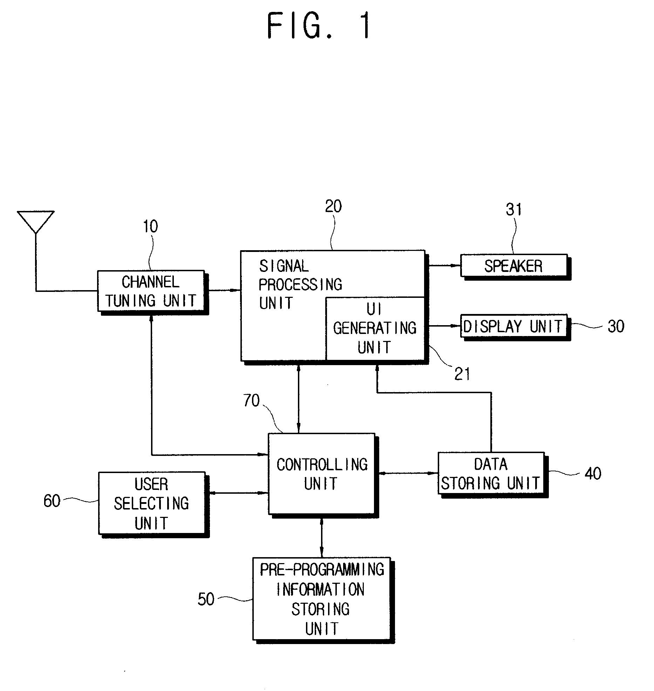

Figure 1 is a block diagram of a TV according to an exemplary embodiment of the present invention. As shown in Figure 1, the TV includes a channel tuning unit 10, a signal processing unit 20, a display unit 30, a speaker 31, a data storing unit 40, a pre-programming information storing unit 50, a user selecting unit 60 and a controlling unit 70.

The channel tuning unit 10 may be implemented to include a tuner (not shown) for tuning an input broadcasting signal via an antenna, a demodulator for demodulating the tuned broadcasting signal, a decoder, a multiplexer, etc. The channel tuning unit 10 tunes a broadcasting signal having a frequency band corresponding to a tuning control signal of the controlling unit 70, which will be described later.

The tuner may be a multi-tuner which is capable of receiving both or one of an analog broadcasting signal and a digital broadcasting signal, and may include an analog tuner receiving an analog broadcasting signal and/or a digital tuner receiving a digital broadcasting signal. For the digital broadcasting signal, the demodulator outputs a received broadcasting signal in the form of a transport stream through a vestigial sideband (VSB) demodulation process, an error correction process, etc.

The tuned broadcasting signal is displayed on the display unit 30 through a process by the signal processing unit 20. The signal processing unit 20 may have a variety of functions corresponding to formats of input video signals.

For example, the signal processing unit 20 may have an analog-to-digital (A/D) converting function to convert input video signals of various formats into a digital video signal of a specified format, a digital decoding function, a scaling function for adjusting a vertical frequency, resolution, picture aspect ratio, etc. for an input digital video signal and/or analog video signal in accordance with an output format of the display unit 30, or a predetermined format converting function.

In addition, the signal processing unit 20 may include a user interface (UI) generating unit 21. The UI generating unit 21 serves to generate information related to residual capacity of the data storing unit 40 and a selection menu under control of the controlling unit 70, which will be described later, and may be implemented by an on screen display (OSD) generating IC. The information on the residual capacity generated by the UI generating unit 21 includes information related to recording time derived from conversion of data capacity into the length of possible recording time. In addition, the selection menu generated by the UI generating unit 21 may include selection items for cancellation of at least one pre-programmed broadcasting program and/or deletion of at least one broadcasting program recorded in the data storing unit 40.

A UI signal generated in the UI generating unit 21 is mixed with a current processed broadcasting signal, and is displayed with the broadcasting signal on the display unit 30.

The display unit 30 may be any of various types of display modules, for example, but not limited to, a cathode ray tube (CRT), a digital light processing (DLP) device, a liquid crystal display (LCD) or a plasma display panel (PDP). An audio signal contained in the broadcasting signal is output via the speaker 31 through a decoding process of the signal processing unit 20.

The data storing unit 40, as a recording device for storing broadcasting programs, may use a high capacity disk such as an HDD.

The pre-programming information storing unit 50 stores information related to broadcasting programs preprogrammed by a user and may be implemented by an erasable programmable read-only memory (EPROM), an electrically erasable programmable read-only memory (EEPROM), or other programmable device. The information related to the pre-programmed broadcasting programs may include a program name, broadcasting station name, the start time of the broadcasting program and the end time of the broadcasting program.

The user selecting unit 60 allows the user to select an item from the selection menu generated by the UI generating unit 21 and may include, for example, but not limited to, keys and/or buttons provided in a control panel of the display apparatus, or a remote controller. The recording function includes the pre-programmed recording and the instant recording. A separate key or button may be provided for each recording function.

In this exemplary embodiment, when the recording function is selected through the user selecting unit 60, the controlling unit 70 assigns a storage space for recording the pre-programmed broadcasting programs in the data storing unit 40 based on the pre-programming information stored in the pre-programming information storing unit 50, calculates the residual capacity of the data storing unit 40 after the assignment, and controls the UI generating unit 21 to generate the information on the residual capacity. The controlling unit 70 may be implemented by a processor or a controller, for example, but not limited to, a central processing unit (CPU) or a micro controller unit (MCU).

The controlling unit 70 may calculate and assign recording capacity using electronic program guide (EPG) information provided as additional broadcasting information.

The user can know the residual capacity of the data storing unit 40 from the information related to the residual capacity displayed on a screen after assigning the pre-programmed broadcasting programs in the data storing unit 40.

If there is a lack of residual capacity, the controlling unit 70 may control the UI generating unit 21 to generate the selection menu for cancellation of at least one pre-programmed broadcasting program and/or deletion of the at least one recorded broadcasting program.

When the cancellation and/or deletion of the broadcasting program are selected through the user selecting unit 60, the controlling unit 70 performs the selected cancellation and/or deletion. Then, the user may secure a storage space in the data storing unit 40 through such cancellation and/or deletion of the broadcasting program.

On the other hand, if the residual capacity is sufficient, the controlling unit 70 performs a recording for a broadcasting program selected for recording or stores the pre-programming information related to a broadcasting program selected for recording in the pre-programming information storing unit 50. Thus, by securing sufficient storage space in the data storing unit 40, a recording or a pre-programmed recording can be correctly performed. For example, in case of the pre-programmed recording, when it is time to start the pre-programmed recording for a broadcasting program, the controller 70 controls the channel tuning unit 10 to tune a channel corresponding to the broadcasting program and records the broadcasting program in the data storing unit 40.

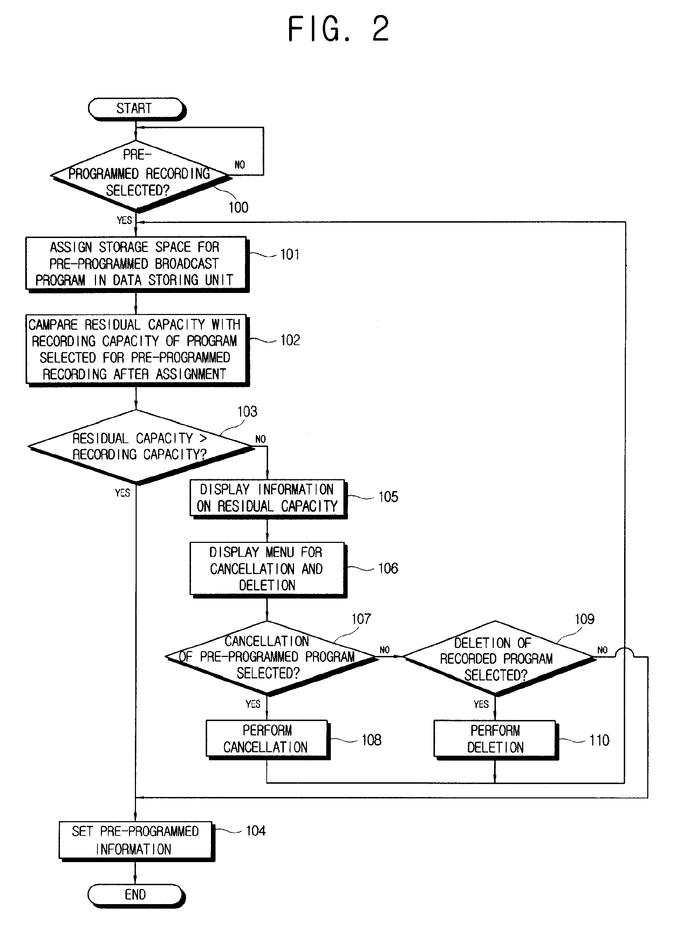

Hereinafter, a flow chart of operation of the TV according to an exemplary embodiment of the present invention will be described with reference to Figure 2. Figure 2 shows an example of the pre-programmed recording of the TV.

When a pre-programmed recording function is selected through the user selecting unit 60 at operation 100, the controlling unit 70 assigns a storage space for recording a pre-programmed broadcasting program in the data storing unit 40, based on pre-programmed information stored in the pre-programming information storing unit 50, at operation 101. As described above, the controlling unit 70 may calculate storage capacity using the EPG information or the like and assign the storage space in the data storing unit 40.

At operation 102, the controlling unit 70 compares a available space, i.e., residual capacity, of the data storing unit 40 after the assigning recording capacity of a broadcasting program selected for pre-programmed recording. In this case, the EPG information or the like is also used in calculating the storage capacity.

If the residual capacity of the data storing unit 40 is larger than the recording capacity of the broadcasting program selected for pre-programmed recording at operation 103, the controlling unit 70 unit stores the pre-programming information of the selected broadcasting program for pre-programmed recording in the pre-programming information storing unit 50.

On the other hand, if that the residual capacity of the data storing unit 40 is calculated to be smaller than the recording capacity of the broadcasting program selected for pre-programmed recording at operation 103, the controlling unit 70 controls the UI generating unit 21 to generate information related to the residual capacity and to display the generated information on the display unit 30 at operation 105.

As described above, the information on the residual capacity may be the information related to the length of possible recording time. For example, the generated information on the display unit 30 may display "recordable time 1:40." In this case, the information related to the residual capacity may be displayed on the display unit 30, along with a warning message of "Reserved recording is impossible because of lack of storage space." Thus, the user can know the information related to the storage space of the data storing unit 40 from the information of the residual capacity and the recording impossible message.

At operation 106, the controller 70 controls the UI generating unit 21 to generate the selection menu for cancellation of the pre-programmed broadcasting programs and/or deletion of the recorded broadcasting programs and to display the generated selection menu on the display unit 30. If the cancellation of the pre-programmed broadcasting programs is selected by the user at operation 107, the controlling unit 70 performs the cancellation by deleting corresponding pre-programming information from the pre-programming information storing unit 50 at operation 108. If the deletion of the broadcasting programs recorded in the data storing unit 40 is selected by the user at operation 109, the controlling unit 70 performs deletion by deleting the recorded broadcasting programs from the data storing unit 40 at operation 110.

After the cancellation and/or deletion, the controlling unit 70 performs operations 101 to 103 again, such as assigning a storage space for recording the preprogrammed broadcasting programs in the data storing unit 40, to determine whether a pre-programmed recording may be performed. Then, the storage space can be secured in the data storing unit 40.

If neither the cancellation nor the deletion is selected by the user under a condition of insufficient residual capacity, the controlling unit 70 stores the pre-programming information in the pre-programming information storing unit 50 to set a reservation at operation 104. However, if the cancellation or the deletion is not performed before the recording, a correct recording of the pre-programmed broadcasting programs is impossible because of the lack in the storage space. In this case, the controlling unit 70 may cause the warning message to be displayed informing the user of the impossibility of pre-programmed recording without setting the reservation, and may end the operation of the TV.

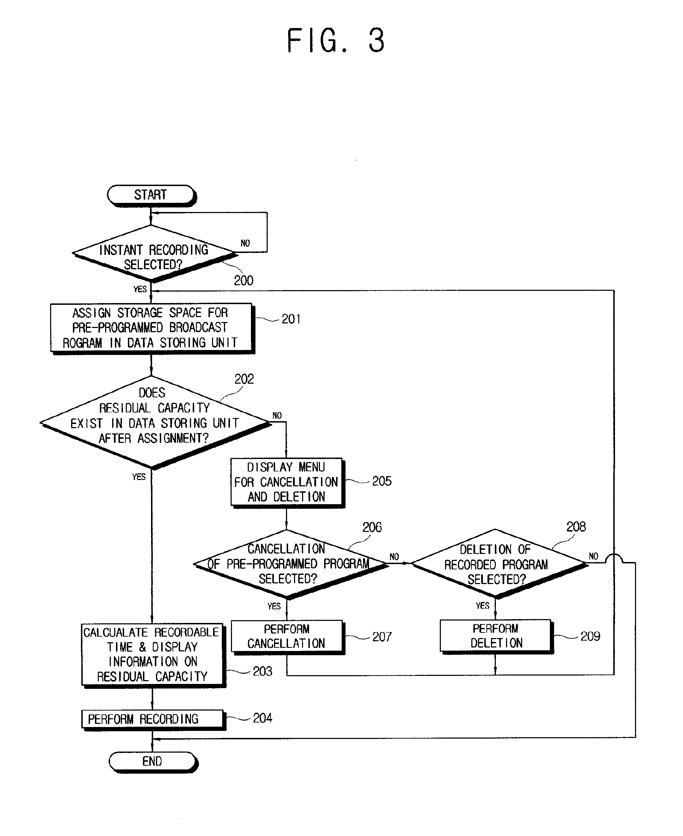

Hereinafter, a flow chart of the TV according to another exemplary embodiment of the present invention will be described with reference to Figure 3. Figure 3 shows an example of the instant recording of the TV. In this exemplary embodiment, the description made in the above exemplary embodiment will be omitted for the purpose of avoiding complexity of the description.

As shown in Figure 3, when an instant recording function is selected through the user selecting unit 60 at operation 200, the controlling unit 70 assigns a storage space for recording a pre-programmed broadcasting program in the data storing unit 40, based on pre-programming information stored in the pre-programming information storing unit 50, at operation 201. As described above, the controlling unit 70 may calculate storage capacity using the EPG information or the like and assign the storage space in the data storing unit 40.

At operation 202, the controlling unit 70 determines whether there exists residual capacity in the data storing unit 40 after the assignment. If it is determined that the residual capacity exists, at operation 203, the controlling unit 70 calculates recordable time, i.e., the residual capacity, of the data storing unit 40, controls the UI generating unit 21 to generate information related to the calculated residual capacity, and to display the generated information on the display unit 30. Then, the instant recording for a broadcasting program selected for recording is performed at operation 204.

On the other hand, if the residual capacity in the data storing unit 40 is insufficient after the assignment, at operation 205, the controlling unit 70 controls the UI generating unit 21 to generate a selection menu for cancellation of pre-programmed broadcasting programs or deletion of recorded broadcasting programs, and to display the generated selection menu on the display unit 30. In this case, a warning message of "Recording is impossible because of lack of storage space." may be displayed on the display unit 30, along with or separately from the selection menu.

If the user selects the cancellation of the pre-programmed broadcasting program at operation 206, the controlling unit 70 performs the cancellation by deleting corresponding pre-programming information from the pre-programming information storing unit 50 at operation 207. If the user selects the deletion of the broadcasting program recorded in the data storing unit 40 at operation 208, the controlling unit 70 performs the deletion by deleting the broadcasting program stored in the data storing unit 40 at operation 209.

After the cancellation and/or deletion, the controlling unit 70 performs operations 201 and 202 again, such as assigning a storage space for recording the preprogrammed broadcasting programs in the data storing unit 40, to determine whether or not an instant recording may be performed. Then, the storage space can be secured in the data storing unit 40.

Although Figure 2 illustrates the pre-programmed recording and Figure 3 illustrates the instant recording in the above exemplary embodiments, it is obvious that Figures 2 and 3 may be applied to both the instant recording and the preprogrammed recording cases.

As apparent from the above description, the exemplary embodiments of the present invention provide a broadcasting signal receiver, which is capable of informing a user about a available residual storage space by displaying information of residual capacity on a display unit after assigning a storage space for recording a preprogrammed broadcasting program when a recording function of a broadcasting program is selected, and a control method thereof. In addition, the present invention provides a user with convenience in securing a recording space by providing the user with a selection menu for cancellation of a pre-programmed broadcasting program and/or deletion of a recorded broadcasting program.

Although a few exemplary embodiments of the present invention have been shown and described, it will be appreciated by those skilled in the art that changes may be made in these exemplary embodiments without departing from the scope of the invention as defined in the appended claims.

## Claims

1. A control method of a broadcasting signal receiver including a data storing unit (40), and a pre-programming information storing unit (50) having pre-programming information related to a pre-programmed broadcasting program stored therein, the method comprising:
receiving an instruction to record a broadcasting program;
assigning a storage space for recording the pre-programmed broadcasting program in the data storing unit (40) based on the pre-programming information stored in the pre-programming information storing unit (50); and
calculating residual capacity of the data storing unit (40) after the assignment.

2. The control method according to claim 1, further comprising displaying information related to the residual capacity of the data storing unit (40).

3. The control method according to claim 1 or 2, further comprising comparing the residual capacity of the data storing unit (40) with a storage capacity required for recording the broadcasting program selected for recording and if the residual capacity of the data storing unit (40) is smaller than the required storage capacity, displaying information related to the residual capacity.

4. The control method according to claim 3, further comprising displaying a selection menu for cancellation of at least one pre-programmed broadcasting program or deletion of a broadcasting program recorded in the data storing unit (40) if the residual capacity of the data storing unit (40) is less than the required storage capacity.

5. The control method according to claim 4, further comprising performing a cancellation of at least one pre-programmed broadcasting program in response to a cancellation selection from the selection menu or performing a deletion of a recorded broadcasting program in response to a deletion selection from the selection menu.

6. The control method according to claim 5, further comprising re-calculating the residual capacity of the data storing unit (40) and displaying the information related to the re-calculated residual capacity of the data storing unit (40) after the cancellation or the deletion.

7. The control method according to claim 5 or 6, further comprising recording the broadcast program selected for recording if sufficient residual capacity exists in the data storing unit (40) after the cancellation or deletion.

8. The control method according to any one of the preceding claims, further comprising recording the program selected for recording if sufficient residual capacity exists in the data storing unit (40).

9. The control method according to any one of the preceding claims, wherein the instruction to record the broadcasting program comprises at least one of a pre-programming recording instruction and an instant recording instruction.

10. A broadcasting signal receiver comprising:
a data storing unit (40);
a pre-programming information storing unit (50) having pre-programming information related to a pre-programmed broadcasting program stored thereon;
a user selecting unit (60) configured to receive an instruction to record a broadcasting program;
a user interface (UI) generating unit (21) configured to generate information related to a residual capacity of the data storing unit (40); and
a controlling unit (70) configured to assign a storage space for recording the pre-programmed broadcasting program in the data storing unit (40) based on the pre-programming information stored in the pre-programming information storing unit (50) in response to an input of the instruction to record the broadcasting program through the user selecting unit (60) and calculate the residual capacity of the data storing unit (40) after the assignment.

11. The broadcasting signal receiver according to claim 10, wherein the controlling unit (70) is further configured to control the UI generating unit (21) to generate and display information related to the residual capacity.

12. The broadcasting signal receiver according to claim 10 or 11, wherein the controlling unit (70) is configured to compare the residual capacity of the data storing unit (40) a required storage capacity for recording the broadcasting program selected for recording, and control the UI generating unit (21) to generate and display information on the residual capacity of the data storing unit (40) if the residual capacity of the data storing unit (40) is smaller than the required storage.

13. The broadcasting signal receiver according to claim 12, wherein, if the residual capacity of the data storing unit (40) is insufficient, the controlling unit (70) is configured to control the user interface (UI) generating unit (21) to generate and display a selection menu for cancellation of at least one pre-programmed broadcasting program or deletion of a broadcasting program recorded in the data storing unit (40).

14. The broadcasting signal receiver according to claim 13, wherein, if the cancellation of at least one pre-programmed broadcasting program or the deletion of the recorded broadcasting program is selected from the selection menu, the controlling unit (70) performs the cancellation or the deletion in response to the selection, re-calculates the residual capacity of the data storing unit (40) after the cancellation or the deletion, and displays the information related to the residual capacity of the data storing unit (40) through the user interface (UI) generating unit (21).
